Europäisches Patentamt

European Patent Office

Office européen des brevets

(11) Numéro de publication: **0 128 865**
**A1**

(12) # DEMANDE DE BREVET EUROPEEN

(21) Numéro de dépôt: **84810255.4**

(51) Int. Cl.³: **H 02 P 8/00**

(22) Date de dépôt: **24.05.84**

(30) Priorité: **24.05.83 CH 2796/83**

(43) Date de publication de la demande: **19.12.84**
**Bulletin 84/51**

(84) Etats contractants désignés: **AT BE CH DE FR GB IT LI LU NL SE**

(71) Demandeur: **Société industrielle de Sonceboz S.A., CH-2605 Sonceboz (Berne) (CH)**

(72) Inventeur: **Antognini, Luciano, 67 avenue de la Gare, CH-1022 Chavannes-près-Renens (CH)**

(74) Mandataire: **Dubois, Jean René et al, BOVARD SA Ingénieurs-Conseils ACP Optingenstrasse 16, CH-3000 Berne 25 (CH)**

(54) Procédé pour améliorer l'amortissement à l'arrêt d'un moteur polyphasé, notamment du type pas à pas, et dispositif pour la mise en oeuvre de ce procédé.

(57) Le procédé permettant d'accroître l'amortissement du rotor et de la charge d'un moteur polyphasé, lorsque l'on désire l'arrêt dudit rotor et de ladite charge dans une position déterminée, consiste à mesurer les tensions induites par le mouvement du rotor dans les différentes phases statoriques, et à modifier les courants imposés dans lesdites phases en fonction de ces mesures, de sorte à engendrer un couple d'amortissement de nature électromagnétique.

Le dispositif pour la mise en œuvre de ce procédé comporte des circuits de mesure des tensions induites dans les phases, et des circuits permettant d'imposer dans lesdites phases des courants dépendant desdites mesures des tensions induites.

EP 0 128 865 A1

1

**Procédé pour améliorer l'amortissement à l'arrêt d'un moteur polyphasé, notamment du type pas à pas, et dispositif pour la mise en oeuvre de ce procédé.**

La présente invention se rapporte à un procédé pour accroître l'amortissement du mouvement du rotor et de la charge d'un moteur polyphasé, notamment du type pas à pas, lorsque l'on désire l'arrêt rapide dudit rotor et de ladite charge dans une position déterminée. Ce procédé consiste à créer un couple d'amortissement de nature électromagnétique en imposant dans les phases actives du moteur des courants dépendant de la mesure et/ou de l'évolution des tensions induites dues au mouvement du rotor et qui se présentent dans les dites phases.

La présente invention se rapporte également à un dispositif mettant en oeuvre ce procédé.

Les moteurs pas à pas sont utilisés dans de nombreux dispositifs où un organe mécanique doit être déplacé par incréments. Ils permettent de convertir une information de nature numérique en une information de nature mécanique. Dans de nombreux cas, la charge du système est constituée d'une charge d'inertie, avec peu ou pas de frottements. L'exigence la plus souvent exprimée est d'amener et d'immobiliser la charge dans une position déterminée, dans le délai le plus bref possible.

L'expérience montre que le mouvement du rotor et de la charge autour de la position finale est de caractère très oscillatoire. Ce comportement est la conséquence même du caractère incrémental de ce type de moteur. Un moteur pas à pas comporte en effet un rotor couplé magnétiquement à plusieurs enroulements statoriques. Pour atteindre une position d'équilibre déterminée, un ou plusieurs jeux d'enroulements sont excités de sorte que, pour ladite position, la somme des couples produits par les champs magnétiques créés par les enroulements statoriques s'annule.

2

Cependant, en proximité de la position d'équilibre, le couple du moteur agit en tant que "ressort", et, vu le faible amortissement du système, le comportement du rotor et de la charge autour de la position finale est fortement oscillatoire. L'immobilisation de la charge dans une position précise est donc lente, et les performances du système s'en trouvent limitées.

On a déjà proposé plusieurs solutions pour améliorer l'amortissement du mouvement du moteur et de la charge autour de la position finale. Une première solution consiste à utiliser un amortisseur mécanique. Cette technique possède le désavantage d'utiliser un élément mécanique supplémentaire, accroissant l'inertie du moteur, et diminuant ses performances dynamiques. L'adjonction de cet élément supplémentaire rend ce procédé coûteux et peu pratique.

Une autre technique connue est décrite dans le brevet américain 3,965,406. Ce procédé consiste à freiner le mouvement du moteur pas à pas avant l'arrêt en commutant les phases pendant un bref instant de manière à produire un couple de freinage, immobilisant le rotor et la charge dans la position désirée. Cette technique est cependant délicate à mettre au point, car la vitesse et la position du rotor ne sont pas connues avec exactitude au moment du freinage. Une légère variation de l'inertie ou des frottements du système se répercutent donc directement sur la qualité de la réponse obtenue.

Le brevet américain 3,760,252 propose de détecter par un capteur la position à partir de laquelle un freinage est désirable. Ce dernier est obtenu par l'alimentation simultanée de toutes les phases du moteur, créant par le couplage entre le rotor et les phases, un amortissement électromagnétique. Cette solution nécessite l'utilisation d'un capteur de position et reste malgré tout sensible aux variations d'inertie et de

3

frottements du système.

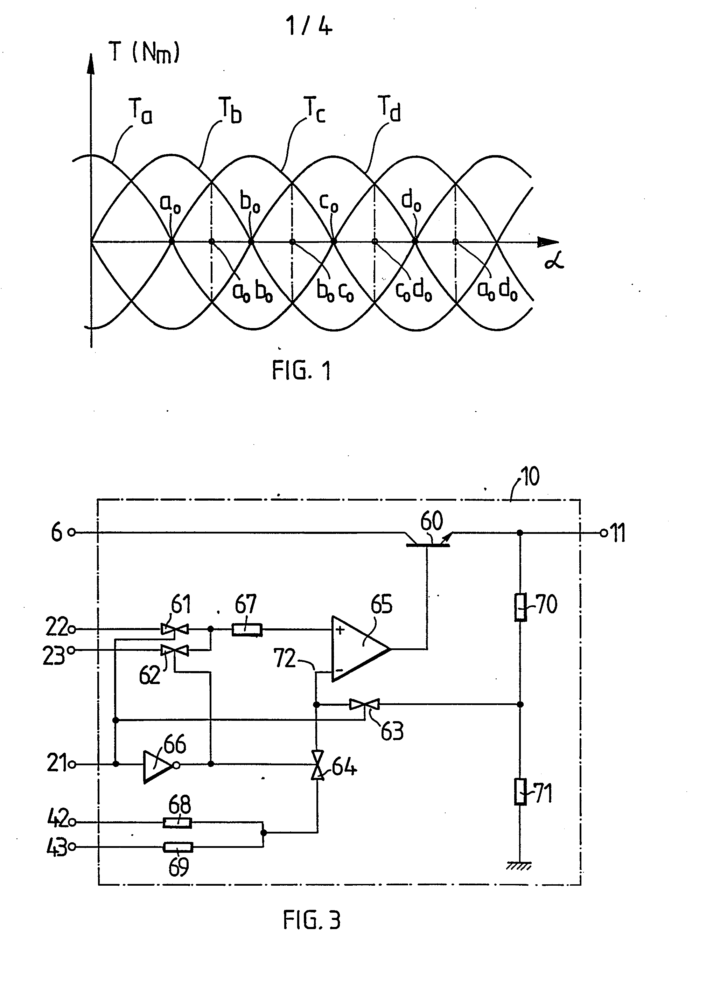

La demande de brevet européenne publiée No 0022 457 propose une méthode et un circuit pour commander la position de détente du moteur pas à pas polyphasé. Cet exposé propose un agencement dans lequel un transducteur (16, fig. 1; 21, fig. 11) accouplé au moteur, fournit des informations en rapport avec la vitesse de rotation du rotor. Les signaux de tension fournis par ce transducteur sont utilisés en conjonction avec un circuit de commande pour freiner le moteur à l'approche de sa position d'arrêt. Cet exposé antérieur ne se base pas sur une mesure de tension induite extraite des phases du moteur, mais sur une information de vitesse obtenue à l'aide d'un transducteur supplémentaire.

Ces premières solutions connues demandent donc toutes un élément mécanique supplémentaire, que ce soit un amortisseur mécanique ou un capteur, ou bien agissent en supposant qu'à un instant déterminé le rotor se trouve dans une certaine position avec une certaine vitesse, ce qui le rend très sensible aux variations des paramètres du système.

D'autres dispositifs connus évitaient l'inconvénient d'avoir à utiliser un capteur angulaire spécial.

Tout d'abord, on citera pour mémoire les exposés DE-A-2 348 121 et EP-A-0059 969, qui tous deux proposent des moyens pour améliorer l'impulsion même qui est fournie périodiquement à un moteur pas à pas, notamment pour stabiliser cette impulsion même si la tension d'alimentation ne l'est pas, mais d'une façon qui ne fait pas appel à la notion de "tension induite".

Par contre, l'exposé EP-A-0087 172 propose un procédé de commande d'un moteur pas à pas dans lequel intervient la notion de "tension induite". On note toutefois premièrement qu'il s'agit de la commande d'un mo-

4

teur pas à pas ne comprenant qu'un seul bobinage et que le but poursuivi réside en un réglage amélioré du couple et non pas un amortissement amélioré sur la position d'arrêt. Dans le dispositif selon cette publication antérieure, le courant dans le bobinage est asservi à une certaine valeur par le fait qu'un interrupteur permutateur court-circuite ce bobinage dès que le courant dans celui-ci dépasse une valeur limite, et branche ce bobinage aux bornes d'une source de tension dès que le courant devient inférieur à cette valeur. Le dispositif d'asservissement y relatif provoque donc une succession alternée de petits intervalles de temps durant lesquels le bobinage est alimenté et de petits intervalles de temps durant lesquels le bobinage est court-circuité, ces intervalles de temps respectifs étant autonomes et ayant des durées respectives qui dépendent de l'inductivité et sont donc en relation avec la tension induite. La mesure (ou le rapport mutuel) de ces intervalles fournit un paramètre dépendant de la tension induite, sans que celle-ci soit véritablement mesurée ou appréhendée. Le rapport de ces intervalles de temps dépend naturellement aussi de la valeur de consigne que l'on impose arbitrairement au courant. A la fin de l'impulsion, cette valeur de consigne est réduite et l'on observe alors le changement que subit le rapport des dits petits intervalles de temps. L'impulsion est considérée comme optimale lorsque la chute de la valeur de consigne se traduit par une variation donnée particulière du rapport précité.

Bien qu'impliquant l'entrée en jeu de la notion de "tension induite", cette publication antérieure ne la traite pas directement comme telle et ne fournit pas d'indication quant à une manière d'améliorer adéquatement l'amortissement à l'arrêt d'un moteur pas à pas, et tout particulièrement d'un moteur pas à pas polyphasé.

5

L'exposé EP-A-0036 931 propose un système de commande d'amortissement d'un moteur pas à pas, selon un mode de travail dont les notions d'inductivité et de tension induite ne doivent pas être totalement étrangères. Toutefois, le dispositif selon cet exposé antérieur fait appel, d'une manière quelque peu similaire au dispositif précédent à un système de commande à découpage (chopper). Les courants instantanés circulant dans les phases du moteur sont comparés et régulés en rapport à une valeur de consigne de forme triangulaire et ainsi un amortissement réglable par action sur ces courants est obtenu. Le dispositif antérieur présente l'inconvénient de nécessiter un système de commande à découpage et ne fait pas appel à la notion de "tension induite" dans le cadre de ses opérations.

Enfin, dans l'exposé EP-A-0060806, on propose un dispositif par lequel on cherche principalement à réduire la consommation d'un moteur pas à pas. Ce dispositif, pour atteindre le but proposé, réalise une reconstitution, par échantillonnage, de la tension induite dans le bobinage d'un moteur pas à pas. Par ce système de reconstitution, on appréhende effectivement l'évolution de la tension induite, sans devoir procéder à des coupures de courant ou recourir à des artifices similaires. Toutefois, cet exposé antérieur ne propose nullement l'utilisation de sa méthode de "reconstitution de l'évolution de la tension induite" en combinaison avec des moyens pour améliorer l'amortissement à l'arrêt d'un moteur pas à pas polyphasé. Une telle combinaison de moyens serait donc tout à fait inédite, permettant d'atteindre des avantages insoupçonnés dans l'exposé européen précédemment mentionné.

Un but de la présente invention est de fournir un procédé et un dispositif du type précédemment mentionné pour améliorer l'amortissement à l'arrêt

6

d'un moteur polyphasé, notamment du type pas à pas, d'une manière à la fois plus simple et plus fiable que ce que permettait l'art antérieur. Un autre aspect avantageux de l'invention consiste à tirer un parti adéquat, jusqu'ici resté non envisagé, de la possibilité de connaître en chaque instant la valeur, c'est-à-dire de connaître l'évolution, de la tension induite dans les phases du moteur, d'une façon purement électronique et sans avoir à interrompre l'alimentation en courant de ces phases.

Conformément à l'invention, ce but est atteint par les caractères énoncés dans les revendications 1, 4 et 8 annexées. Les revendications qui en dépendent définissent des aspects particuliers de l'invention, mettant en évidence la possibilité d'améliorer encore les performances atteintes par l'objet de l'invention, sous forme de particularités complémentaires intéressantes, de mesures améliorant encore la fiabilité ou la précision de fonctionnement, etc.

On remarque que l'invention accorde une notable importance à la tension induite par le mouvement du rotor au moment où il gagne sa position d'arrêt, la définition de "tension induite" étant en liaison avec la notion de "vitesse de rotation". A ce sujet, on a la relation

$$U_{mi} = \frac{\partial \psi i}{\partial \alpha} \cdot \omega \qquad (1)$$

où $U_{mi}$ représente cette tension induite dans la phase i du moteur, $\psi_i$ le flux associé à cette phase i, $\frac{\partial \psi i}{\partial \alpha}$ la dérivée de ce flux par rapport à la position angulaire $\alpha$ du rotor, et $\omega$ la vitesse angulaire du rotor. Bien que le terme $\frac{\partial \psi i}{\partial \alpha}$ ne soit pas constant et varie en fait en fonction de la position, il sera montré plus loin que l'utilisation de la tension induite permet d'obtenir un amortissement constant et indépendant de la position.

Comme on l'a mentionné, l'invention vise à fournir un procédé permettant d'amortir le mouvement d'un moteur pas à pas en agissant sur les courants des phases actives du moteur. Le couple instantané d'un moteur pas à pas polyphasé est lié aux courants parcourant les phases par la relation

$$T = \sum_i \frac{\partial \psi_i}{\partial \alpha} \cdot i_i \qquad (2)$$

où T représente le couple total, $\psi_i$ le flux associé à la phase i, $\frac{\partial \psi_i}{\partial \alpha}$ la dérivée de ce flux par rapport à la position angulaire du rotor, et $i_i$ le courant instantané parcourant la phase i. Seules les phases parcourues par un courant contribuent au couple, et on les dénommera des phases actives. Cette relation montre que si les phases actives du moteur sont parcourues par des courants constants, aucun terme du deuxième membre de cette dernière expression dépend de la vitesse. Le couple instantané est donc uniquement fonction de la position, et le seul couple dépendant de la vitesse et pouvant créer un amortissement est engendré par les frottements présents dans le système.

Pour introduire un couple d'amortissement de nature électromagnétique, le procédé selon l'invention propose de modifier les courants parcourant les phases actives en fonction de la vitesse, mesurée indirectement au travers de la tension induite de mouvement. Comme il sera démontré plus loin, ce procédé permet de créer un couple d'amortissement de nature électromagnétique équivalent à celui d'un amortisseur visqueux idéal.

Une particularité de l'objet de l'invention consiste en la possibilité d'alimenter les phases du moteur pas à pas, soit par une tension constante, permet-

8

tant un fonctionnement à haute vitesse sans amortissement, soit par des courants dépendant de la tension induite, comme il sera expliqué plus loin, d'une façon permettant de créer un amortissement important. Ce dispositif permet d'utiliser le transistor de puissance présent dans une alimentation de courant. De cette manière, un amplificateur supplémentaire pour réguler le courant n'est plus nécessaire, et les pertes thermiques se trouvent supportées par des éléments déjà prévus à cet effet.

On note que l'appréhension de la tension induite de mouvement, basé sur l'analyse de l'onde de courant parcourant les phases actives du moteur joue un rôle important dans l'objet de la présente invention.

Les caractéristiques et les avantages de l'invention seront mieux compris à la lecture de la description faite en référence au dessin annexé dans lequel :

9

- la figure 1 représente les caractéristiques de couple statique d'un moteur pas à pas polyphasé

- la figure 2 est un schéma bloc d'un dispositif selon le mode
de réalisation préféré de l'invention

- la figure 3 représente le schéma d'un exemple de circuit de
régulation permettant de contrôler le courant parcourant une
phase active

- la figure 4 est un schéma d'un exemple de circuit de mesure
de la tension induite dans les phases statoriques du moteur par
le mouvement du rotor.

- la figure 5 illustre le fonctionnement du circuit de la figure 4

- la figure 6 représente le schéma d'un exemple de circuit
permettant de fournir les signaux nécéssaire au circuit de mesure de la figure 4

- la figure 7 illustre le fonctionnement du circuit de la figure 6.

A la figure 1 sont représentées les caractéristiques de couple
statique produites par les phases A, B, C et D d'un moteur pas
à pas polyphasé, lorsque lesdites phases sont parcourues par un
courant $i_o$. Le cas du moteur polyphasé est traité ici uniquement en tant qu'exemple et ne limite aucunement l'invention à
ce type de moteur en particulier.

On remarque que ces caractéristiques sont sensiblement sinusoïdales, et que les couples $T_a$, $T_b$, $T_c$ et $T_d$, engendrés par les
phases A, B, C et D respectivement, répondent aux relations
suivantes:

$$T_a = k.\sin (Nr. \alpha') . i_a \qquad\qquad (3)$$

10

$$T_b = -k.\cos(Nr.\alpha).i_b \qquad (4)$$

$$T_c = -k.\sin(Nr.\alpha).i_c \qquad (5)$$

$$T_d = k.\cos(Nr.\alpha).i_d \qquad (6)$$

où Nr représente le nombre de dents du rotor du moteur pas à pas considéré, alors que k désigne une constante dépendant du moteur considéré et de ses paramètres constructifs, et $i_a$, $i_b$, $i_c$ et $i_d$ représentent les courants parcourant les phases A, B, C et D respectivement. L'angle du rotor est désigné par $\alpha$.

Lorsque l'on désire immobiliser le rotor dans une position déterminée, on peut agir de différentes manières sur les différentes phases du moteur.

Une première possibilité consiste à alimenter une seule phase à la fois. La position de repos correspondra donc à la position où le couple produit par la phase considérée s'annulle. Dans le cas de la phase A, la position d'équilibre correspondante $a_o$ est représentée à la figure 1. Les positions d'équilibre $b_o$, $c_o$ et $d_o$, définies par les phases B, C et D sont également représentées à la figure 1.

Une deuxième possibilité consiste à alimenter simultanément deux phases par deux courants égaux. Dans ce cas, la position d'équilibre correspondante sera définie par l'angle où la somme des couples produits par lesdeux phases actives s'annulle. Dans le cas des phases A et B, cette position d'équilibre $ab_o$ est représentée à la figure 1. Les positions d'équilibre $bc_o$, $dc_o$ et $ad_o$, correspondant respectivement à l'activation des phases B et C, C et D ainsi que lesphases D et A, sont également reportées à la figure L

11

La troisième possibilité consiste à alimenter simultanément deux phases par des courants différents. Dans le cas où, par exemple, les phases A et B sont parcourues par deux courants $i_{ao}$ et $i_{bo}$, la position d'équilibre. correspondra à l'angle où la somme des deux couples individuels s'annulle. En utilisant les expressions 3 et 4, nous avons:

$$T_a + T_b = 0 = k.(i_{ao}.\sin(Nr.\alpha) - i_{bo}.\cos(Nr.\alpha) )$$

En résolvant cette expression pour  , nous obtenons:

$$\alpha = \frac{1}{Nr}. \; arc \; tan \; (\frac{ib}{ia}) \tag{8}$$

Cette dernière relation montre que n'importe quelle position d'équilibre, comprise entre les position d'équilibre des phases respectives A et B, peut être atteinte. Un raisonnement analogue peut être tenu pour les phases B et C, C et D, et D et A. Cette technique est bien connue dans l'art antérieur sous sa dénomination anglaise de "ministepping".

Ces trois modes opératoires possèdent un inconvénient commun. L'expérience montre en effet que le mouvement du rotor autour de sa position d'équilibre finale est fortement oscillatoire. L'équation de mouvement, lorsque, par exemple, les phases A et B sont parcourues par les courants $i_{ao}$ et $i_{bo}$, peut s'écrire:

$$J.\dot{w} = k.i_{ao}.\sin(Nr.\alpha) - k.i_{bo}.\cos(Nr.\alpha) - F.w \tag{9}$$

où J représente l'inertie totale associée au rotor, w la vitesse angulaire de ce dernier, $\dot{w}$ son accélération et F le coefficient de frottement visqueux présent dans le système.

L'amortissement de nature électromagnétique, provoqué par la perturbation des courants dans les phases par la tension induite de mouvement, est très faible, et disparaît même totalement si l'on impose dans les phases actives des courants constants.

Le procédé selon l'invention, qui va maintenant être décrit, permet d'engendrer un couple d'amortissement de nature électromagnétique, en modifiant les courants parcourant les phases actives en fonction de la vitesse du rotor.

12

Comme on désire éviter l'utilisation d'un capteur de vitesse supplémentaire, on utilise la relation existant entre la tension induite de mouvement et la vitesse pour mesurer indirectement cette dernière. Si nous considérons le cas où les phases A et B sont actives, la tension induite dans ces deux phases, désignée par $U_{ma}$ et $U_{mb}$, répondent aux deux relation suivantes:

$$U_{ma} = +k.Nr.w.\sin(Nr.\alpha) \qquad (10)$$

$$U_{mb} = -k.Nr.w.\cos(Nr.\alpha) \qquad (11)$$

Ces deux tensions, mesurées par un procédé qui sera décrit plus loin, sont directement proportionnelles à la vitesse $w$, et peuvent être utilisées pour agir sur le courant parcourant les phases.

Si les phases actives, dans notre exemple les phases A et B, sont alimentées par deux sources de courant, délivrant deux courants $i_a$ et $i_b$ répondant aux relations suivantes:

$$i_a = i_{ao} - kr.U_{ma}$$

$$i_b = i_{bo} - kr.U_{mb}$$

où $i_{ao}$ et $i_{bo}$ représentent deux valeurs de référence, définissant une position d'équilibre $\alpha_{\ast}$, et kr un gain pouvant être choisi en fonction des nécéssités du réglage, le couple instantané produit par les phases A et B peut être explicité à l'aide des relations 3 et 4. Nous obtenons donc:

$$T = k.\sin(Nr.\alpha).(i_{ao}-kr.k.w.\sin(Nr.\alpha))$$
$$-k.\cos(Nr.\alpha).(i_{bo}+kr.k.\cos(Nr.\alpha).w) \quad (12)$$

On remarquera que cette expression contient des termes dépendants de la vitesse $w$. En regoupant les différents termes, on obtient:

$$T = k.\sin(Nr.\alpha).i_{ao} - k.\cos(Nr.\alpha).i_{bo}$$
$$- k.kr.w.(\sin(Nr.\alpha)^2+\cos(Nr.\alpha)^2) \quad (13)$$

En simplifiant le dernier terme par la relation trigonométrique bien connue $(\sin a)^2+(\cos a)^2 = 1$, on obtient:

13

$$T = k.\sin(Nr.\alpha).i_{ao} - k.\cos(Nr.\alpha).i_{bo} - k.kr.w \qquad :(14)$$

En comparant cette expression avec l'équation 7, nous constatons l'apparition d'un terme supplémentairede couple $T_f$ correspondant à:

$$T_f = k.kr.w \qquad\qquad (15)$$

Ce terme de couple ne dépend que de la vitesse w, et de la constante k et du gain kr, et est de même nature que le terme F.w de la relation 9, qui correspond à un amortissement visquex. Ce couple $T_f$ correspond donc à un couple d'amortissement de nature éléctromagnétique, produit par la modulation des courants des phases actives par la tension induite.

On remarquera en plus que ce couple d'amortissement $T_f$ ne dépend pas de la position, ni des courants de consigne iao et ibo. L'amortissement résultant est donc uniforme en toute position, ce qui rend ce procédé particulièrement avantagueux lorsque des positions représentant des fractions de pas doivent être atteintes, selon la méthode bien connue dans l'art antérieur sous la dénomination de "ministepping".

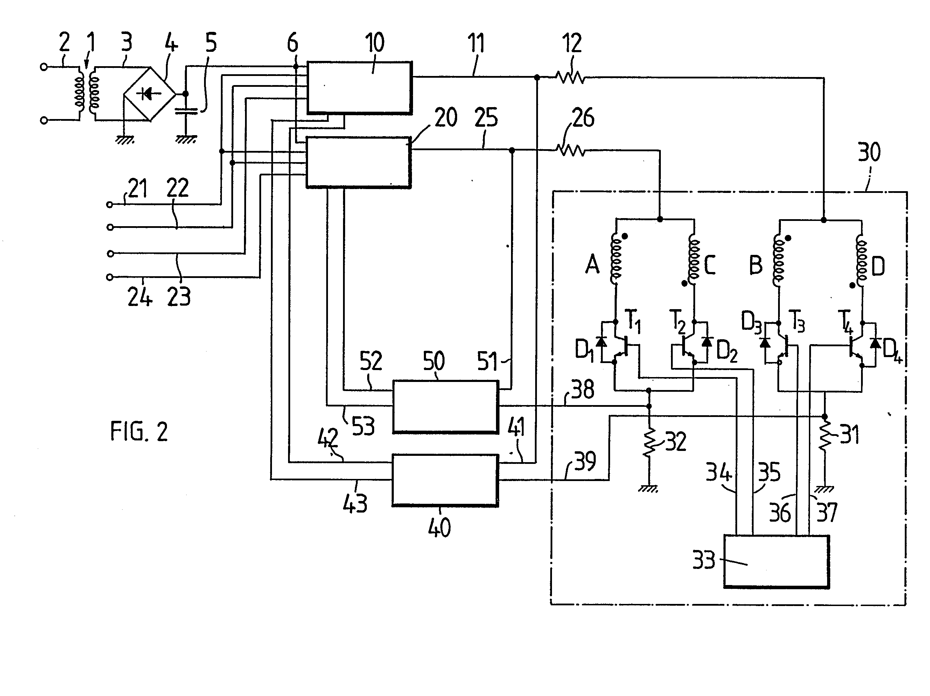

A la figure 2 est représenté un mode préféré de réalisation de l'invention. La référence 1 désigne le transformateur alimentant le dispositif de commande du moteur pas à pas. Son enroulement primaire est relié au réseau, alors que son enroulement secondaire 3 est relié au pont redresseur 4. La tension redressée apparaissant à la sortie du pont redresseur 4 est filtrée par une capacité 5, avant d'alimenter les deux circuits de régulation 10 et 20, qui avec les circuits de mesure de la tension induite40 et 50 constituent l'objet de la présente invention. Des exemples de réalisation de ces circuits seront expliqués plus loin.

Le moteur pas à pas, dans notre cas un moteur à deux phases bifiliaires, est représenté par les quatre enroulements A,B,C, et D, qui sont alimentés au travers du circuit 30, bien connu dans l'art antérieur.Les quatre enroulements A B, C,et D sont connectés, au travers des résistances 12 et 22,au circuits 10 et 20, quiagissent, comme il sera

14

montré plus loin, en tant que sources de tension ou de courant.L'autre extrémité des enroulements A,B,C et D est connectée aux transistors de commutation $T_1$ à $T_4$,agissant en tant qu'interrupteurs,permettant ainsi d'enclencher et de déclencher les phases respectives.Les diodes $D_1$ à $D_4$ sont connectées en parallèle sur les transistor de commutation, de sorte à permettre le passage du courant apparaissant à la commutation de phases couplées magnétiquement.Les émetteurs des transistors $T_1$à $T_4$ sont reliés à la masse au travers des résistances de mesure R31 et R32 de faible valeur.

Un circuit 33 produit des signaux 34,35,36 et 37,permettant de commander séquentiellement les transistors $T_1$,$T_2$,$T_3$ et $T_4$ de sorte à alimenter les phases du moteur dans la séquence AB-BC-CD-DA pour un fonctionnement en sens horaire, et dans la séquence DA-DC-CB-BA-AD pour un fonctionnement en sens antihoraire. Comme les phases A et C, ainsi que les phases B et D, ne sont jamais activées simultanément, deux résistances de mesure 31 et 32 suffisent pour mesurer le courant parcourant la phase A ou la phase C, respectivement la phase B ou la phase D.Les tensions U38 et U39, recueillies aux bornes des résistances de mesure 31 et 32, sont donc proportionnelles aux courants parcourant les phases actives du moteur.

Deux circuits de mesure de la tension induite par la rotation du rotor du moteur, dont le fonctionnement sera détaillé plus loin,sont associés aux phases actives du moteur et portent la référence 40 et 50. Ces deux circuits reçoivent à leur entrée les signaux 41 et 51, correspondant à la tension totale appliquée à chaque phase active, comportant en série les résistances additionnelles 12 et 22,ainsi que les signaux 38 et 39, correspondant à la mesure du courant parcourant ces mêmes phases actives.

Ces deux circuits 40 et 50 délivrent à leur sortie les signaux 42 et 52, proportionnels aux courants mesurés dans les phases actives, ainsi que les signaux 43 et 53,propor-

0128865

tionnels à la tension induite de mouvement présente dans ces phases actives.

Les circuits de régulation 10 et 20 reçoivent ces quatre signaux 42,43,52 et 53 à leur entrée, en provenance des circuits de mesure 40 et 50. Ces circuits de régulation 10 et 20 reçoivent également à leur entrée un signal logique commun 21.Lorsque le niveau de tension de ce signal logique 21 correspond à un niveau logique "1",la tension délivrée à la sortie 11 et 21 des deux circuits de régulation 10 et 20 est constante et proportionnelle à une valeur de référence 22, commune aux deux circuits.

Dans ce mode opératoire, les circuits 10 et 20 ignorent tous les signaux à leur entrée, mis à part les signaux 21 et 22, et agissent en tant que sources de tension classiques.Ce mode opératoire est choisi lorsque le moteur doit être activé à haute vitesse, ou bien qu'aucun amortissement n'est désiré.

Lorsque par contre, le signal logique d'entrée 21 est au niveau logique "0",les circuits 10 et 20 se comportent, comme il sera expliqué . en détail plus loin, en tant que régulateurs de courant, et délivrent à leur sortie 11 et 21 des courants qui sont proportionnels respectivement à deux valeurs de référence 23 et 24, auxquelles les circuits 10 et 20 soustraient préalablement une grandeur proportionnelle aux signaux 43 et 53, correspondant aux tensions induites dans les phases actives.

Dans ce mode opératoire, les courants parcourant les phases actives sont fortement influencés par la vitesse du rotor, mesurée indirectement par le biais de la tension induite de mouvement.Il en résulte l'apparition d'un couple d'amortissement de nature éléctromagnétique important.Les deux valeurs de référence 22 et 23, correspondant aux courants parcourant les phases actives lorsque le rotor est au repos, peuvent être choisies librement, en fonction de la position de repos à atteindre.

16

On remarque que la possibilité de contrôler et d'asservir l'évolution de la tension induite au moment de l'arrêt du moteur, notamment en assurant une certaine importance, prédéterminée, de suroscillation (amortie sur une alternance, voire éventuellement quelques alternances) permet, en particulier, comme les essais pratiques l'ont vérifié, d'améliorer dans une mesure non négligeable la précision du positionnement à l'arrêt.

17

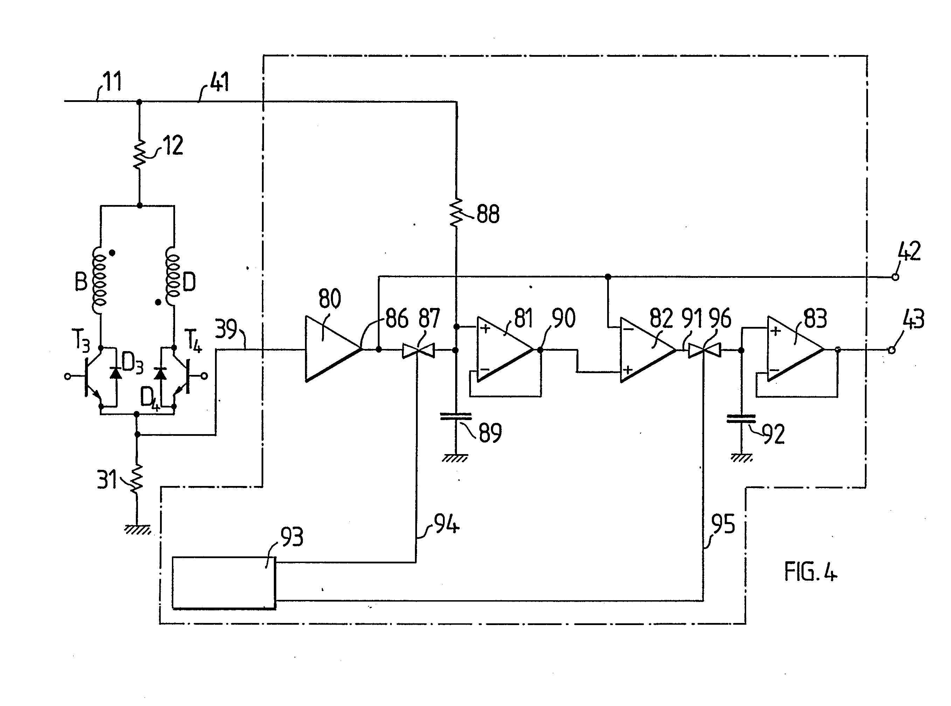

La figure 3 donne le schéma de principe d'un exemple de réalisation des circuits de régulation 10 et 20. Comme ces deux circuits sont en fait identiques, le fonctionnement de ces circuits se fera sur la base du circuit 10. Le fonctionnement du circuit 20 s'obtiendra en remplaçant les références 11,23,42 et 43 par les références 21,24,52 et 53. Ce circuit 10, comme les autres circuits décrits plus loin, est alimenté par une source de tension non représentée. Cette source délivre une tension positive $+V_{cc}$ et une tension négative $-V_{cc}$ par rapport à un point milieu qui est relié à la masse du circuit. Ces tensions sont utilisées notamment pour alimenter les différents amplificateurs opérationnels utilisés dans ces circuits.

Un transistor NPN de puissance 60 est placé entre l'entrée 6 du circuit de régulation 10, alimentée par la tension redressée en provenance du pont redresseur 4 de la figure 1, et la sortie 11, alimentant les enroulements B et D du moteur. Lorsque le signal logique de commande 21 est à l'état "1", les portes de transmission 61 et 63 sont dans leur état conducteur, alors que les portes de transmission 62 et 64 sont dans leur état bloqué. Ces portes de transmission sont réalisées par des transistors MOS. L'inverseur 66 a pour unique rôle de créer un signal logique complémentaire au signal de commande 21. Ce signal de commande peut être délivré, à titre d'exemple, par un microprocesseur qui contrôlerait le fonctionnement du moteur, et qui pourrait choisir le mode opératoire des circuits 10 et 20.

Lorsque les portes de transmission 61 et 63 sont dans leur état conducteur, l'entrée non inverseuse de l'amplificateur 65 est reliée, au travers d'une résistance 67, à la tension de référence 22, alors que l'entrée inverseuse de ce même amplificateur 65 est reliée au pont résistif formé par les résistances 70 et 71, de valeur R70 et R71. Le circuit composé du transistor de puissance 60, de l'amplificateur 65, des portes de transmission 61 et 63, ainsi que des résistances 67,70 et 71 et du signal de référence 22, se

18

comporte en tant que source detension, et la tension . U11 présente à la sortie 11 dans ce mode opératoire peut s'exprimer par:

$$U11 = U22 \cdot \frac{R70+R71}{R71} \qquad . \qquad (16)$$

Les enroulements B et D sont donc alimentés par une tension continue. La référence de tension 22 peut être réalisée par une réfénce de tension fixe, extérieure au circuit 10 .

Le comportement des circuits 10 et 20 est différent lorsque le signal logique de commande est à l'état "0". Dans ce cas, les portes de transmission 61 et 63 sont dans leurs état bloqué, alors que les portes 62 et 64 sont conductrices. L'entrée non inverseuse de l'amplificateur 65 est reliée par la résistance 67 au signal de référence 23, de tension U23, alors que son entrée inverseuse est reliée, au travers de la porte de transmission 64, au signal 42, en provenance du circuit de mesure 40, au travers de la résistance 68, et au signal 43, provenant également du circuit de mesure 40, par la résistance 69.

Le circuit de mesure 40, qui sera décrit en détail plus loin, délivre le signal 42, dont la tension U42 est proportionnelle au courant $i_{bd}$, circulant dans la phase active parmi les phases B et D, et répond à la relation suivante

$$U42 = ki.i_{bd} \qquad (17)$$

où ki est une constante dépendant de la valeur de la résistance de mesure 31 de la figure 1 et des caractéristiques internes du circuit 40. Le signal 43, dont la tension U43 est proportionnelle à la tension induite de mouvement mesurée dans la phase active des phases B ou D, est également délivré par le circuit de mesure 40. Si $U_{mbd}$ désigne cette tension induite, la tension U43 peut s'exprimer par:

$$U43 = km.U_{mbd} \qquad . \qquad (18)$$

où km est une constante dépendante des caractéristiques internes du circuit 40 pouvant être choisie librement.

19

Nous allons maintenant montrer que le circuit composé du transistor 60, de l'amplificateur 65, des portes de transmission 62 et 64, des résistances 67,68,69 et répondant aux signaux 23,42 et 43 agit en tant que source de courant et permet de contrôler le courant $i_{bd}$ parcourant la phase active. En admettant, en un premier temps, que la tension U43 est nulle et que les résistances 68 et 69 sont d'égale valeur, la tension U72, présente à l'entrée inverseuse 72 de l'amplificateur 65 peut s'exprimer par:

$$U72 = \tfrac{1}{2}.U42 = \tfrac{1}{2}.ki.i_{bd} \qquad (19)$$

Si cette tension U72 est inférieure à la tension de référence U23 appliquée à l'entrée non inverseuse de l'amplificateur 65, la tension U73 à la sortie 73 de ce dernier va augmenter en fonction de son gain. Comme le transistor 60 est monté en suiveur de tension, la tension U11 à la sortie 11 du circuit 10 va également augmenter, provoquant à son tour un accroissement du courant $i_{bd}$ parcourant la phase. Le courant $i_{bd}$ augmentera jusqu'à ce que la tension U72 égale la tension de référence U23. Nous aurons alors:

$$U23 = U72 = \tfrac{1}{2}.ki.i_{bd} \qquad (20)$$

La tension de référence U23 permet donc de contrôler le courant parcourant la phase active. Cette tension de référence peut être réalisée, à titre d'exemple, par un convertisseur numérique-analogique, commandé par le microprocesseur contrôlant le moteur. Différents courants de consigne, correspondant à différentes position d'équilibre, peuvent ainsi être facilement choisis.

Lorsque le signal de mesure 43, correspondant proportionnellement à la tension induite de mouvement $U_{mbd}$, est différent de zéro, la tension U72, présente à l'entrée non inverseuse de l'amplificateur 65, peut s'exprimer par:

$$U72 = \tfrac{1}{2}.(U42+U43) = \tfrac{1}{2}.(ki.i_{bd}+km.U_{mbd}) \qquad (21)$$

Le courant $i_{bd}$ imposé dans la phase vaudra donc:

$$i_{bd} = \frac{2.U23}{ki} - \frac{km.U_{mbd}}{ki} \qquad (22)$$

20

Le courant $i_{bd}$ parcourant la phase active B ou D est donc proportionnel à la tension de référence U23, à laquelle le circuit soustrait préalablement une grandeur proportionnelle à la tension induite de mouvement $U_{mbd}$, mesurée par le circuit 40. Les circuits 10 et 20 permettent donc de réaliser les régulateurs créant, de par le contôle du courant parcourant les phases actives, un amortissement de nature électromagnétique , conformément au procédé expliqué plus haut.

Il existe bien entendu d'autres exemples de circuit pouvant réaliser les fonctions décrites. Un avantage particulier de l'exemple de réalisation préféré réside cependant dans l'utilisation d'éléments déjà présents dans le régulateur de tension, alimentant généralement le circuit de commande du moteur, pour réaliser une source de courant commandée. Le transistor de puissance, ainsi que l'amplificateur de régulation sont ainsi utilisés pour ces deux fonctions. De plus, les pertes thermiques, particulièrement importantes lorsque le circuit de régulation fonctionne en tant que source de courant, sont supportées par le transistor de puissance, déjà dimensionné à cet effet, et situé en un emplacement propice à l'évacuation de la chaleur.

.La figure 4 représente le schéma de principe d'un exemple de réalisation du circuit de mesure de la tension induite de mouvement 40. Comme les circuits 40 et 50 sont en fait identiques, le fonctionnement détaillé est expliqué en relation au circuit 40. Il suffit cependant de remplacer les connections portant les références 39,41,42 et 43 par les connections de référence 38,51,52 et 53 pour obtenir le fonctionnement détaillé du circuit 50. On remarquera également que, comme les phases B et D ne sont jamais enclenchées simultanément dans le mode opératoire choisi, un seul circuit de mesure 40 peut être utilisé pour mesurer la tension induite de mouvement $U_{mbd}$, présente dans la phase active des phases B et D. Le circuit 50 effectue la même mesure pour les phases A et C.

21

Supposons, à titre d'exemple, que la phase D soit enclenchée. Dans ce cas, le transistor $T_4$ est conducteur, et le courant en provenance du circuit de régulation 10 au travers de la connection 11 traverse successivement la résistance additionnelle 12, la phase D, le transistor $T_4$ et la résistance de mesure 31. La résistance additionnelle 12 est utilisée lorsque une diminution de la constante de temps électrique associée aux phases du moteur est désirée. La résistance de mesure 31 est généralement de faible valeur, et la tension U31, recueillie aux bornes de cette résistance, est appliquée, au travers de la connection 39 à l'amplificateur 80. Ce dernier produit donc à sa sortie 86 une tension U86, proportionnelle au courant circulant dans la phase active, en l'occurence le phase D. Le gain de l'amplificateur 80 est choisi de sorte que la tension U86 à sa sortie soit égale à la tension U11, appliquée à la phase D et aux éléments qui se trouvent en série avec cette dernière, lorsque le courant parcourant la phase active est égal à $U11/R_d$, où $R_d$ représente la somme des résistances en série présentes dans le circuit associé à la phase D, comprenant notamment la résistance 12, la résistance 31, ainsi que la résistance propre de l'enroulement D lui-même.

La sortie 86 de l'amplificateur 80 est reliée à la porte de transmission 87, à la connection externe 42, ainsi qu'à l'entrée inverseuse de l'amplificateur différentiel 82. La sortie de la porte de transmission 87 est reliée à l'entrée non inverseuse de l'amplificateur 81, monté en suiveur de tension. La résistance 88 et la capacité 89 sont également connectées à cette entrée non inverseuse de l'amplificateur 81. La deuxième borne de la résistance 88 est reliée à la connection 11, alimentant l'enroulement à partir du circuit 10, alors que la deuxième borne de la capacité 89 est reliée à la terre. Il règne donc aux bornes du circuit composé de la résistance 88 et de la capacité 89 la même tension qu'aux bornes du circuit comprenant la résistance 12, la phase D, le transistor de commutation $T_4$ ainsi que la résistance de mesure 31.

La sortie 90 de l'amplificateur 81, monté en suiveur de tension, est reliée à l'entrée non inverseuse de l'amplificateur 82, dont la sortie 91 est reliée à la porte de transmission 96 . La sortie de cette porte de transmission est reliée à l'entrée non inverseuse de l'amplificateur 83, monté en suiveur de tension. Une capacité 92 est également connectée entre l'entrée non inverseuse de l'amplificateur 83 et la terre, et permet, avec l'aide de la porte de transmission 96 , d'échantillonner le signal à la sortie de l'amplificateur 82 et de le mémoriser dans la capacité 92. Le signaux 94 et 95, commandant l'ouverture des portes 87 et 96, provenant du circuit 93, seront décrits en détail plus loin.

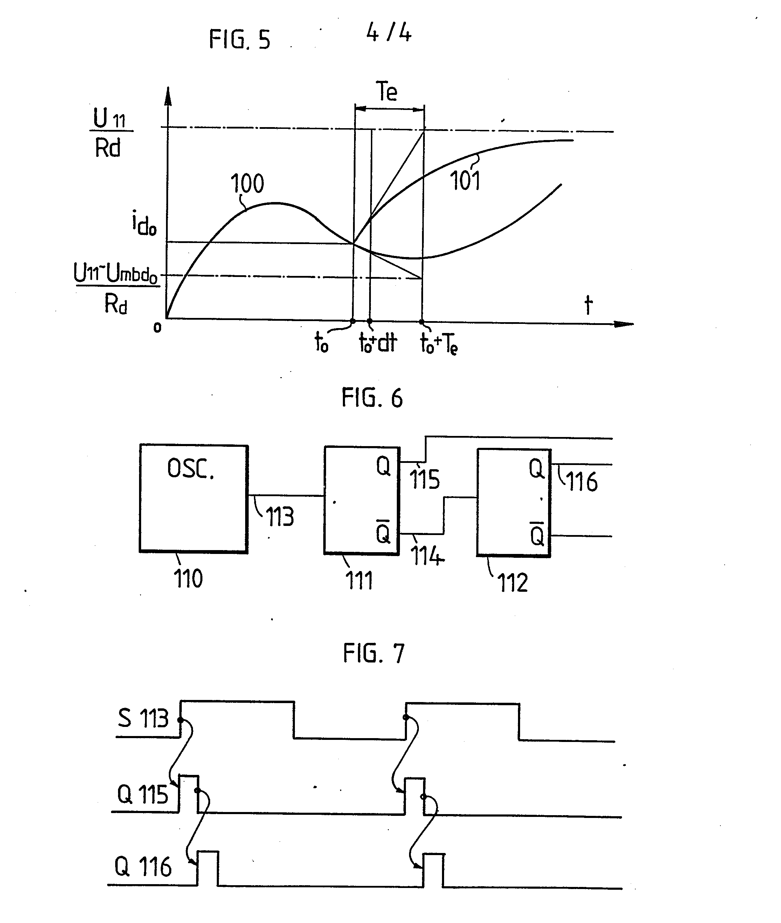

On va maintenant expliquer, à l'aide de la figure 5, le fonctionnement du circuit de mesure 40. La courbe 100 de la figure 5 montre le signal U85 obtenu à la sortie de l'amplificateur de mesure 80, proportionnel au courant parcourant la phase active du moteur, en l'occurence la phase D. Ce courant répond par ailleurs à la relation

$$U11 = R_d \cdot i_d + L \cdot \frac{di_d}{dt} + U_{mbd} \qquad (23)$$

où U11 représente la tension alimentant la phase et les éléments se trouvant en série avec celle-ci, $R_d$ la résistance totale associée à cette phase, et L son inductance. $U_{mbd}$ désigne la tension induite de mouvement, inconnue à priori et que l'on se propose de mesurer. La courbe 101 à la figure 5 représente l'allure qu'aurait le courant $i_d$ de la phase D si la tension induite $U_{mbd}$ était nulle à partir de l'instant $t_o$. Dans ce cas, le courant serait régi par l'équation

$$U11 = R_d \cdot i_o + L \cdot \frac{di_o}{dt} \qquad (24)$$

et dont la solution consiste en une croissance exponentielle du courant vers la valeur asymptotique $U11/R_d$. La courbe 101 représente également la tension qui existerait aux bornes de la capacité 89 si la porte de transmission 87 avait été conductrice jusqu'à $t_o$ et bloquée ensuite.

La tension à la sortie 91 de l'amplificateur différentiel 82 correspond à la différence des tensions U90 et U89, et est donc nulle tant que les courbes 100 et 101 coïncident, ce qui est le cas lorsque la porte de transmission 87 est conductrice.

23

Nous allons maintenant montrer que la tension induite de mouvement $U_{mbd}$, présente dans la phase active D à l'instant $t_o$ où la porte de transmission 87 passe de l'état conducteur à l'état bloqué, est proportionnelle à l'écart des courbes 100 et 101, mesuré un court instant dt après $t_o$.

Supposons tout d'abord que la tension $U_{mbd}$ varie suffisamment lentement dans le temps pour qu'on puisse la considérer constante pendant l'intervalle de temps compris entre $t_o$ et $t_o$+dt, et désignons par $U_{mbdo}$ sa valeur dans cet intervalle. Dans ces conditions, l'équation 23 admet une solution entre $t_o$ et $t_o$+dt qui peut être décrite par

$$i_{dt}(t) = i_{dto} \cdot e^{-\left(\frac{t-t_o}{T_e}\right)} + \left(\frac{U11 - U_{mbdo}}{R_d}\right) \cdot \left(1 - e^{-\left(\frac{t-t_o}{T_e}\right)}\right) \quad (25)$$

où $i_{dto}$ représente la valeur du courant i(t) à l'instant $t_o$, et $T_e$ la constante de temps associée à la phase. Cette relation montre que le courant $i_d$ converge exponentiellement, en partant de la valeur $i_{do}$, vers la valeur asymptotique $(U11 - U_{mbdo})/R_d$, qui serait la valeur atteinte par le courant en un temps infini si la tension induite $U_{mbd}$ restait définitivement égale à sa valeur $U_{mbdo}$ à l'instant $t_o$.

Comme le courant $i_d$ dans la phase D produit une tension U86 à la sortie de l'amplificateur de mesure 80 qui vaut, par le choix du gain fait précédemment, $U86 = R_d \cdot i_d$, on peut également exprimer la valeur de la tension U86 entre $t_o$ et $t_o$+dt par

$$U86 = R_d \cdot i_d \cdot e^{-\left(\frac{t-t_o}{T_e}\right)} + (U11 - U_{mbdo}) \cdot \left(1 - e^{-\left(\frac{t-t_o}{T_e}\right)}\right) \quad (26)$$

La tension aux bornes du condensateur 89 peut aussi être facilement exprimée. A l'instant $t_o$, comme la porte de transmission 87 passe de l'état conducteur à l'état bloqué, la tension U89 vaut

$$U89 = U86 = R_d \cdot i_{do} \quad (27)$$

La tension U89 aux bornes du condensateur augmente ensuite vers la valeur asymptotique.U11, et ceci selon la relation

$$U89 = R_d \cdot i_{do} \cdot e^{-\left(\frac{t-t_o}{T_{rc}}\right)} + U11 \cdot \left(1 - e^{-\left(\frac{t-t_o}{T_{rc}}\right)}\right) \quad (28)$$

24

$T_{rc}$ désigne la constante de temps associée au circuit comprenant la capacité 89 et la résistance 88 et qui vaut $T_{rc}$=R88.C89.
Si $T_{rc}$ est choisie égale à $T_e$, constante de temps éléctrique
associée à la phase, les termes exponentiels des relations 25
et 29 sont de même nature, et il est facile de calculer la tension U91, apparaissant à la sortie de l'amplificateur 82. Nous
avons en effet

$$U91 = U90 - U86 \qquad (29)$$

et comme U90 = U89 puisque l'amplificateur 81 est monté en suiveur de tension, nous pouvons calculer U90 à l'aide des expressions 26 et 28. Nous obtenons donc:

$$U91 = U_{mbdo} \cdot \left(1 - e^{-\left(\frac{t-t_o}{T_e}\right)}\right) \qquad (30)$$

Si nous désirons connaître plus précisément la tension U91 à
l'instant $t_o$+dt, nous pouvons remplacer l'expression exponentielle, pour autant que dt soit beaucoup plus petit que $T_e$, par
l'expression suivante:

$$\left(1 - e^{-\frac{dt}{T_e}}\right) = \frac{dt}{T_e} \qquad (31)$$

La valeur de la tension U91 à la sortie de l'amplificateur 82
à l'instant $t_o$+dt vaudra donc

$$U91 = U_{mbdo} \cdot \frac{dt}{T_e} \qquad (32)$$

Cette dernière relation montre clairement que la tension U91
à la sortie de l'amplificateur différentiel 82 un court instant
dt après que l'on ait bloqué la porte de transmission 87 est
proportionnelle à la valeur instantanée $U_{mbdo}$ de la tension induite $U_{mbd}$ à l'instant $t_o$. A l'instant $t_o$+dt, on vient prélever la tension U91 en rendant conductrice pendant un très bref
instant la porte de transmission 96, ce qui permet de charger
la capacité 92 à la tension U91. La porte 96 est ensuite bloquée, et la tension U91 à l'instant $t_o$+dt se trouve ainsi mémorisée jusqu'au prochain cycle de mesure. Le temps de mesure
dt doit donc être choisi suffisament grand pour que la tension
U91 à l'instant $t_o$+dt soit suffisament importante, et suffisamment petit pour que la condition dt$\ll T_e$ soit respectée.

0128865

25

Le cycle de mesure de la tension induite $U_{mbd}$ consiste donc à rendre conductrice pendant un bref instant la porte de transmission 87 au temps $t_o$, et à prélever la tension U91, présente un instant dt plus tard à la sortie de l'amplificateur différentiel 82, en rendant conductrice pendant un très bref instant la porte de transmission 96. A ce moment, le résultat du cycle de mesure est mémorisé dans la capacité 92, et un nouveau cycle peut être commencé. Des essais ont montré que la fréquence du cycle de mesure peut atteindre plusieures dizaines de kHz. L'évolution de la tension induite de mouvement peut donc être fidèlement reconstituée à l'aide des nombreux échantillons obtenus aux différentes mesures.

La figure 6 montre un schéma de principe d'un exemple de réalisation du circuit 93, qui fournit les signaux 94 et 95, représentés également à la figure 7, aux circuits de mesure 40 et 50. Un oscillateur 110 fournit un signal logique 113, dont la fréquence est choisie de sorte à garantir un bon fonctionnement des circuits 40 et 50. Des essais ont montré que des fréquences allant de 10 à 100 kHz permettent d'atteindre de bons résultats. La fréquence délivrée par l'oscillateur 110 n'est donc pas critique, et il est donc également possible d'utiliser d'autres signaux de fréquence fixe pouvant déjà être présents dans le système.

Le signal de fréquence fixe 113 est relié à l'entrée de la bascule monostable 111. Cette dernière est agencée de sorte que sa sortie Q, portant la référence 115, passe et reste à l'état logique "1" pendant une très brève période de 3 à 5 $\mu$s chaque fois que le signal 113 à son entrée effectue une transition de "0" à "1". La sortie $\overline{Q}$ de la bascule 111, désignée par le référence 114, est reliée à l'entrée d'une deuxième bascule monostable 112, dont la sortie Q 116 passe et reste également à "1" pendant un bref instant de 3 à 5 us, chaque fois que le signal à son entrée effectue une transition de "0" à"1". Ceci est le cas lorsque la sortie Q 115 de la première bascule 111 passe de "1" à "0". Les signaux 115 et 116, présents aux sorties Q des deux bascules 111 et 112 sont donc constitués de très brèves impulsions à "1", de même fréquence mais décalés dans le temps.

Comme il doit s'écouler un temps dt entre l'activation de la première porte de transmission 87 et l'activation de la deuxième porte de transmission 96, on utilise le signal 116 présent à la sortie de la deuxième bascule, pour activer la première porte de transmission (signal 94), et le signal 115 pour activer la deuxième porte 96 (signal 95). Le temps s'écoulant entre une impulsion du signal 116 et l'impulsion suivante du signal 115 correspond donc au temps de mesure dt.

Bien que l'exemple de réalisation du procédé selon l'invention ne traite que le cas d'un moteur pas à pas à quatre enroulements bifiliaires, la portée du procédé selon l'invention ne se limite pas à ce cas particulier. Le procédé peut être facilement appliqué à d'autres types de moteurs pas à pas, ainsi qu'à n'importe quel moteur polyphasé ou à des transducteurs éléctromécaniques dont la ou les phases sont le siège de tensions induites de mouvement. Le procédé particulier de la détéction de la tension induite à partir de deux échantillons consécutifs du courant parcourant une phase possède l'avantage d'être insensible aux perturbations provoquées par des commutations de phases pouvant avoir eu lieu avant le cycle de mesure, et peut être avantageusement utilisé pour mesurer la tension induite de mouvement dans des phases où le courant subit de fréquentes discontinuités à la suite de fréquentes commutations.

0128865

1

## REVENDICATIONS

1. Procédé pour améliorer l'amortissement à l'arrêt du mouvement du rotor d'un moteur polyphasé comportant plusieurs phases statoriques couplées magnétiquement audit rotor, caractérisé par le fait qu'il consiste à mesurer les tensions induites dans les phases statoriques par le mouvement dudit rotor et à imposer aux différents courants dans les phases statoriques des valeurs dépendant des mesures des tensions induites.

2. Procédé selon la revendication 1, caractérisé par le fait que le courant imposé dans une phase enclenché est proportionnel à la somme algébrique d'une valeur de consigne et d'une grandeur proportionnelle à la mesure de la tension induite de mouvement effectuée sur cette même phase.

3. Procédé selon la revendication 1, caractérisé en ce que la mesure de la tension induite dans une phase déterminée consiste à produire un premier signal, proportionnel au courant parcourant ladite phase en un premier instant, à produire un deuxième signal proportionnel au courant qui circulerait en un deuxième instant, situé après le premier instant, si la tension induite avait été nulle entre le premier et le deuxième instant, à produire un troisième signal proportionnel au courant parcourant effectivement la phase au deuxième instant, et à produire un quatrième signal proportionnel à la différence entre le deuxième et le troisième signal, ce quatrième signal étant proportionnel à la tension induite due au mouvement du rotor qui se présente dans ladite phase entre le premier et le deuxième instant.

4. Procédé pour améliorer l'amortissement à l'arrêt du mouvement du rotor d'un moteur polyphasé comportant plusieurs phases statoriques couplées magnétiquement audit rotor, caractérisé par le fait que les tensions in-

2

duites dans les phases statoriques par le mouvement dudit rotor sont mesurées et utilisées pour établir en leur dépendance des valeurs à imposer aux différents courants dans les phases statoriques, et par la combinaison du fait que le courant imposé dans une phase enclenchée est proportionnel à la somme algrébrique d'une valeur de consigne et d'une grandeur proportionnelle à la valeur instantanée de la tension induite appréhendée sur cette même phase, et du fait que l'appréhension de la dite tension induite est effectuée point par point sur la base d'une comparaison répétitive, sur des intervalles élémentaires successifs de temps, entre l'évolution réelle de la valeur du courant et l'évolution simulée que la valeur du courant suivrait en l'absence de tension induite.

5.       Procédé selon la revendication 4, caractérisé en ce que la dite appréhension de la tension induite dans une phase déterminée consiste à produire un premier signal, proportionnel au courant parcourant la dite phase en un premier instant, à produire un deuxième signal proportionnel au courant qui circulerait en un deuxième instant, situé après le premier instant, si la tension induite avait été nulle entre le premier et le deuxième instant, à produire un troisième signal proportionnel au courant parcourant effectivement la phase au deuxième instant, et à produire un quatrième signal proportionnel à la différence entre le deuxième et le troisième signal, ce quatrième signal étant proportionnel à la tension induite due au mouvement du rotor, qui se présente dans ladite phase entre le premier et le deuxième instant.

6.       Procédé selon l'une des revendications 1 à 5, caractérisé en ce que les dites valeurs à imposer aux différents courants en dépendance des tensions induites commencent à être imposées au plus tôt à partir du dernier changement d'état de commande qui doit aboutir

3

à l'arrêt du rotor.

7.      Procédé selon l'une des revendications 1 à 5, caractérisé en ce que les dites valeurs de courant commencent à être imposées à partir d'un instant tel que le mouvement du rotor gagnant sa position d'arrêt comprenne une suroscillation d'importance prédéterminée et contrôlée.

8.      Dispositif de commande pour la mise en oeuvre d'unprocédé, notamment d'un procédé conforme à une ou plusieurs des revendications 1 à 7 améliorant l'amortissement du mouvement d'arrêt du rotor dans un moteur polyphasé comportant plusieurs phases statoriques couplées magnétiquement au rotor, ce dispositif comprenant des moyens pour imposer des courants dans les phases actives du moteur, caractérisé en ce qu'il comporte, outre des moyens d'appréhension ou de mesure pour effectuer l'appréhension ou la mesure des tensions induites produites par le mouvement du rotor, dans les différentes phases statoriques, des moyens pour modifier les valeurs des dits courants en réponse aux signaux délivrés par les dits moyens d'appréhension ou de mesure, ces moyens pour modifier les valeurs des courants comportant un circuit qui réalise la somme algébrique d'une valeur de consigne et d'une grandeur proportionnelle à la tension induite dans la dite phase.

9.      Dispositif selon la revendication 8, caractérisé en ce que les dits moyens d'appréhension ou de mesure comportent, pour chaque phase considérée, des moyens pour produire un premier signal proportionnel au courant parcourant la dite phase en un premier instant, des moyens pour produire un deuxième signal proportionnel au courant qui circulerait dans la dite phase en un deuxième instant, situé après le premier instant, si la tension induite avait été nulle entre le premier et le deuxième instant, des moyens pour produire un troisième

0128865

4

signal proportionnel au courant parcourant effectivement
la phase au deuxième instant, et des moyens pour produire
un quatrième signal proportionnel à la différence entre
le deuxième et le troisième signal, ce quatrième signal
étant proportionnel à la tension induite présente dans
la dite phase entre le premier et le deuxième instant.

10.     Dispositif selon la revendication 8 ou la revendication 9, caractérisé en ce que les dits moyens pour
modififier les valeurs des dits courants en réponse aux
signaux délivrés par les dits moyens d'appréhension ou de
mesure sont commandés de façon à entrer en action à partir
du dernier changement d'état de commande qui doit aboutir
à l'arrêt du moteur.

11.     Dispositif selon l'une des revendications 8 à 10,
caractérisé en ce que les dits moyens pour modifier les
valeurs des dits courants en réponse aux dits signaux
délivrés par les dits moyens d'appréhension ou de mesure
sont agencés pour entrer en action à partir d'un instant
tel que le mouvement du rotor gagnant sa position d'arrêt
comprenne une suroscillation d'importance prédéterminée
et contrôlée.

0128865

1/4

FIG. 1

FIG. 3

FIG. 2

2/4

0128865

FIG. 4

0128865

0128865

FIG. 5    4 / 4

FIG. 6

FIG. 7

S 113

Q 115

Q 116

Office européen
des brevets

**RAPPORT DE RECHERCHE EUROPEENNE**

0128865

Numéro de la demande

EP  84 81 0255

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,D | EP-A-0 087 172  (N.V. PHILIPS' GLOEILAMPENFABRIEKEN)<br>* Page 9, lignes 1-9; page 3, lignes 1-26; figure 1 * | 1,8 | H 02 P    8/00 |
| Y,D | EP-A-0 036 931  (IBM)<br>* Page 4, ligne 26 - page 5, ligne 35; page 9, ligne 10 - page 10, ligne 7; figures 2-4 * | 1,2,8 | |
| Y,D | EP-A-0 059 969  (SIEMENS AG)<br>* Page 2, lignes 14-29; page 4, ligne 28 - page 6, ligne 5; figures 2,3 * | 1,2,8 | |
| A,D | DE-A-2 348 121  (G. BERGER)<br>* Page 5, lignes 1-14; figure 3 * | 1,8 | |
| | | | **DOMAINES TECHNIQUES RECHERCHES (Int. Cl. 3)** |
| A,D | EP-A-0 022 457  (IBM)<br>* Abrégé; page 3, lignes 5-28; figures 11,12 * | 1,8 | H 02 P    8/00 |

Le présent rapport de recherche a été établi pour toutes les revendications

| Lieu de la recherche | Date d'achèvement de la recherche | Examinateur |
|---|---|---|
| LA HAYE | 07-09-1984 | WEIHS J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82